Europäisches Patentamt

European Patent Office

Office européen des brevets

(19)

(11) **EP 1 034 476 B1**

(12) **FASCICULE DE BREVET EUROPEEN**

(45) Date de publication et mention
de la délivrance du brevet:
**20.03.2002 Bulletin 2002/12**

(21) Numéro de dépôt: **98958291.1**

(22) Date de dépôt: **01.12.1998**

(51) Int Cl.7: **G06F 11/00**, H04M 3/22

(86) Numéro de dépôt international:
**PCT/FR98/02582**

(87) Numéro de publication internationale:
**WO 99/28820 (10.06.1999 Gazette 1999/23)**

(54) **PROCEDE DE VERIFICATION DU FONCTIONNEMENT D'UN SYSTEME**

VERFAHREN ZUR FUNKTIONSPRÜFUNG EINES SYSTEMS

METHOD FOR VERIFYING THE PROPER FUNCTIONING OF A SYSTEM

(84) Etats contractants désignés:
**AT BE DE ES FI FR GB IT NL SE**

(30) Priorité: **03.12.1997 FR 9715217**

(43) Date de publication de la demande:
**13.09.2000 Bulletin 2000/37**

(73) Titulaire: **VALIOSYS**
**14200 Hérouville Saint Clair (FR)**

(72) Inventeurs:
• **DELLACHERIE, Samuel**
  **F-14000 Caen (FR)**
• **BROULT, Christophe**
  **F-61220 Briouze (FR)**
• **DEVULDER, Samuel**
  **F-14280 Saint-Contest (FR)**
• **LAMBERT, Jean-Luc**
  **F-14860 Amfreville (FR)**

(74) Mandataire: **Loisel, Bertrand et al**
**Cabinet Plasseraud,**
**84, rue d'Amsterdam**
**75440 Paris Cédex 09 (FR)**

(56) Documents cités:
• **HIGASHINO T ET AL: "AUTOMATIC ANALYSIS AND TEST CASE DERIVATION FOR A RESTRICTED CLASS OF LOTOS EXPRESSIONS WITH DATA PARAMETERS" IEEE TRANSACTIONS ON SOFTWARE ENGINEERING, vol. 20, no. 1, 1 janvier 1994, pages 29-42, XP000423553**
• **"PREPROCESSOR FOR LINEAR AND MIXED INTEGER PROGRAMMING MODELS" IBM TECHNICAL DISCLOSURE BULLETIN, vol. 32, no. 5A, octobre 1989, page 192/193 XP000048883**
• **GREENBERG: "The ANALYZE rulebase for supporting LP analysis" ANNALS OF OPERATIONS RESEARCH, vol. 65, 1996, pages 91-126, XP002075478**

EP 1 034 476 B1

## EP 1 034 476 B1

**Description**

La présente invention concerne le domaine de la vérification de systèmes.

Les systèmes auxquels peut s'appliquer l'invention peuvent être de nature très diverse. Ils incluent notamment les logiciels informatiques séquentiels ou parallèles, les protocoles de communication, les systèmes de contrôle-commande, les systèmes répartis, les composants électroniques, etc. En règle générale, l'invention est applicable à tout système physique dont le fonctionnement peut se modéliser sous forme d'automates communicants.

On entend par modèle une abstraction du système permettant d'en paramétrer le fonctionnement. Dans le cas présent, c'est la traduction sous forme d'automates du système. Celle-ci doit bien sûr conserver le maximum de propriétés du système, tout en permettant une flexibilité vis-à-vis des méthodes de vérification employées.

On entend par automate une représentation paramétrique d'une partie du système, formée d'états et de transitions (c'est-à-dire de sommets et d'arcs étiquetés) qui permet d'en écrire le fonctionnement. Un automate peut se décrire sous différentes formes : graphiquement, de manière textuelle, sous forme d'un processus informatique, etc. Un automate communicant est un automate qui peut échanger de l'information avec d'autres automates, sous forme d'envois de messages, de synchronisations, etc.

La vérification au sens de la présente invention consiste à démontrer que des propriétés du système tel que représenté par des automates sont vraies ou fausses, en exhibant un chemin ou en prouvant qu'un tel chemin ne peut pas exister, un chemin étant une succession (bien entendu possible) d'états globaux du modèle. Le chemin donne la suite ordonnée de chaque état de chaque élément du modèle. Dans le cas présent, ce sera la suite ordonnée d'états de chaque automate composant le modèle.

Il faut noter que la vérification se fait en règle générale sur un modèle et non sur le système lui-même. Elle diffère en cela du test qui est plus directement lié au produit fini. Le test consiste à faire fonctionner le système réel (par exemple exécuter le logiciel) afin d'en étudier le comportement, en tentant de couvrir au maximum son fonctionnement. De nombreux ateliers de vérification permettent toutefois de générer automatiquement le système réel (le logiciel) à partir du modèle, ou d'en définir les spécifications. Il existe un nombre assez important d'outils d'aide à la modélisation et à la vérification (voir par exemple A.A. Loureiro et al. : « Fdt tools for protocol development », In FORTE'92, 1992).

Dans le domaine de la vérification, trois types de méthodes sont le plus souvent employées :

1. La simulation. La majorité des outils existants permettent de faire de la simulation. Elle correspond à parcourir les états du modèle les uns après les autres selon une stratégie plus ou moins sophistiquée, afin de rechercher des chemins pertinents. Cette méthode a l'avantage de pouvoir s'utiliser sur n'importe quel niveau d'abstraction du système (tant que cette abstraction possède la notion de chemin) et d'être très souple d'utilisation. Elle a deux inconvénients : elle se heurte à l'explosion combinatoire du nombre d'états du système (plus la recherche est profonde, plus le nombre de chemins est grand), et elle ne prouve rien (ne pas trouver de chemin en profondeur n ne prouve pas qu'il n'en existe pas en profondeur n+1).

2. Le « model-checking » (voir A. Kerbrat : « Méthodes symboliques pour la vérification de processus communicants : étude et mise en oeuvre », Thèse de Doctorat, Université Joseph Fourier, Grenoble, 1994, ou K. L. McMillan : « Symbolic Model Checking », Kluwer Academic Publishers, 1993). Les méthodes dites de « model-checking » nécessitent une modélisation du système sous forme d'automates. Les automates de cette modélisation sont fusionnés en un unique automate dont chaque état correspond à un état global du modèle. Sur cet automate global, il est ensuite possible de vérifier des propriétés décrites en logique temporelle. L'avantage de cette méthode réside dans la richesse de la logique temporelle qui permet de spécifier un nombre très large de types de requêtes. Elle permet également de faire facilement de la simulation. Elle a cependant pour limitation de générer très rapidement un automate global de taille gigantesque qui en règle générale ne peut donc pas être construit, malgré un certain nombre de techniques réduisant la taille de cet automate (utilisation de techniques de codage de l'automate global, fabrication d'un modèle de l'automate global aux propriétés plus faibles, etc.).

3. La preuve par théorèmes (voir J.-R. Abrial : « The B-book », Cambridge University Press, 1995, ou B. Chetali : « Formal vérification of concurrent programs: How to specify UNITY using the Larch Prover », Technical report, INRIA, France, 1995). Le modèle est ici constitué d'un ensemble de formules logiques qui en décrivent les propriétés de base. Une nouvelle propriété à vérifier étant donnée sous forme d'une formule logique, une preuve sera constituée des étapes successives permettant d'obtenir cette nouvelle formule logique à partir des formules logiques du modèle et de règles d'inférence. Cette méthode a l'avantage de produire de vraies preuves formelles. Cependant, il n'existe pas à l'heure actuelle de bonnes stratégies d'inférence, et l'ordinateur est presque toujours réduit à ne résoudre que les étapes simples de la preuve et laisser les parties ardues au logicien humain.

Dans le domaine des réseaux de Pétri, il est connu d'employer des méthodes d'optimisation faisant appel à la programmation linéaire pour effectuer de la vérification de systèmes. Cependant, la programmation linéaire n'est utilisée que sur des modèles très fortement contraints et. donc non utilisables pour modéliser des systèmes réels (voir J. Esparza et al. : « A polynomial-time algorithm to décide liveness of bounded free choice nets », Theoretical Computer Science, 102 : 185-205, 1992), ou pour la génération de l'ensemble des invariants du modèle étudié (algorithme de Fourier-Motzkin en particulier), ensemble qui est construit sans discernement et qui devient rapidement de taille gigantesque.

Plus récemment, une équipe a étudié l'utilisation de la programmation entière directement sur un modèle d'automates communicants (voir J.C. Corbett : « Automated Formal Analysis Methods for Concurrent and Real-Time Software », PhD thesis, Department of Computer Science, University of Massachussets, USA, 1992). Mais l'utilisation de la programmation entière ne permet pas d'avoir d'algorithme efficace, et surtout ne permet pas de faire de preuve sur le modèle. Cette équipe a étudié de manière approfondie la puissance d'expressivité du système de requêtes, et en a déduit qu'elle était très proche de la logique temporelle.

Une autre utilisation de la programmation linéaire dans le domaine de la vérification a été présentée par J.L. Lambert (« Présentation du projet validation de protocoles par programmation linéaire », Technical Report 27, Greyc, Université de Caen, 1994). Cette approche ne fait pas intervenir de notion d'ordonnancement des messages, ce qui constitue une limitation quant aux conditions de fonctionnement du système qui peuvent être analysées.

La présente invention a pour but d'enrichir les techniques de vérification, en proposant un procédé capable de prouver des propriétés du système étudié et dont la complexité ne croisse pas trop dramatiquement avec la taille du système.

L'invention propose ainsi un procédé de vérification du fonctionnement d'un système modélisé par un système d'automates synchronisés par un ensemble de messages, comprenant les opérations suivantes :

- on décompose le système en un nombre $N$ de sous-systèmes numérotés de $n=1$ à $n=N$ ;
- on fournit des paramètres décrivant chaque sous-système $n$, $1 \leq n \leq N$, sous forme d'un automate respectif composé d'un ensemble $E_n$ d'états $e^i$ du sous-système $n$, avec un ensemble $A_n$ de transitions $a^j_n$ entre paires d'états de l'ensemble $E_n$, chaque transition $a^j_n$ de l'ensemble $A_n$ étant associée à un sous-ensemble $M^j_n$ de l'ensemble des messages de synchronisation de façon à traduire le fait que chaque message du sous-ensemble $M^j_n$ survient lorsque le sous-système décrit change d'état conformément à la transition $a^j_n$ ;
- on construit un système d'équations linéaires comprenant, pour $1 \leq t \leq T$ et $1 \leq n \leq N$, d'une part des équations de flot de la forme :

$$e^i_n(t-1) = \sum_{j \in B^i_n} a^j_n(t) \quad \text{pour} \quad e^i_n \in E_n$$

et de la forme :

$$e^i_n(t) = \sum_{j \in C^i_n} a^j_n(t) \quad \text{pour} \quad e^i_n \in E_n \; ,$$

et d'autre part des équations de synchronisation de la forme :

$$m^k(t) = \sum_{j \in D^k_n} a^j_n(t) \quad \text{pour} \quad m^k \in M_n \; ,$$

où $T$ désigne un nombre d'étapes successives du fonctionnement du système, $B^i_n$ désigne l'ensemble des index $j$ tels que la transition $a^j_n$ de l'ensemble $A_n$ provienne de l'état $e^i$ de l'ensemble $E_n$, $C^i_n$ désigne l'ensemble des index $j$ tels que la transition $a^j_n$ de l'ensemble $A_n$ conduise à l'état $e^i$ de l'ensemble $E_n$, $M_n$ désigne la réunion des sous-ensembles de messages $M^j_n$ respectivement associés aux transitions de l'ensemble $A_n$, $D^k_n$ désigne l'ensemble des index $j$ tels qu'un message $m^k$ de l'ensemble $M_n$ appartienne au sous-ensemble $M^j_n$ associé à la transition $a^j_n$ de l'ensemble $A_n$, la variable $e^i(t)$, $0 \leq t \leq T$, est une inconnue du système linéaire associée à l'état $e^i$ de l'ensemble $E_n$ et à l'étape $t$, la variable $a^j_n(t)$ $(1 \leq t \leq T)$ est une inconnue du système linéaire associée à la transition $a^j_n$ de l'ensemble $A_n$ et à l'étape $t$, la variable $m^k(t)$, $1 \leq t \leq T$, est une inconnue du système linéaire associée au message $m^k$ de l'ensemble des messages de synchronisation et à l'étape $t$ ;

- on définit une propriété du système à vérifier, sous la forme de contraintes linéaires supplémentaires imposées aux inconnues du système linéaire ;
- on applique au système linéaire soumis aux contraintes supplémentaires une méthode de résolution par programmation linéaire ; et
- on analyse le résultat de la programmation linéaire pour déterminer si ladite propriété est vérifiée par le système.

Ce procédé possède peu de points communs avec les trois méthodes antérieures commentées ci-dessus. Comme le « model-checking », il part d'une modélisation sous forme d'automates communicants, mais là s'arrête la comparaison. Le système de requêtes est du même ordre d'expressivité que la logique temporelle, bien qu'il soit plus proche de la notion de chemin que celle-ci : dans le cas-présent, les requêtes sont typiquement basées sur des questions d'accessibilité d'états et de transitions, et d'envois ou de réception de messages. Une différence fondamentale avec le « model-checking » est que le procédé opère directement sur les automates de la modélisation sans passer par un automate global produit de tous les automates du modèle. D'autre part, les preuves que donne la programmation linéaire correspondent à des sommes d'équations permettant d'arriver à une équation trivialement fausse. Elles n'ont donc pas de rapport avec la preuve par théorèmes. Le procédé permet également de fournir des chemins validant une requête. Mais ce chemin est construit d'un bloc, sans parcours des états comme le ferait la simulation ou le model-checking. La solution proposée par la programmation linéaire n'est pas forcément un chemin à valeurs entières. Il convient donc de construire un modèle d'automates qui réduise au maximum le nombre de solutions non entières et qui permette, lorsqu'il en apparaît, de les interpréter et les éliminer, en introduisant des contraintes linéaires supplémentaires pertinentes.

D'autres particularités et avantages de la présente invention apparaîtront dans la description ci-après d'exemples de réalisation non limitatifs, en référence aux dessins annexés, dans lesquels :

- la figure 1 est un schéma d'un exemple simple de système auquel peut s'appliquer la présente invention ;
- les figures 2 à 5 sont des diagrammes d'automates représentant des éléments du système de la figure 1 ;
- les figures 6 et 7 sont des variantes de l'automate de la figure 5 ; et
- les figures 8 à 11 sont des diagrammes montrant des chemins que le procédé permet de mettre en évidence dans le système d'automates.

L'utilisation d'automates est courante dans le domaine de la vérification. Ils ont l'avantage d'être à la fois expressifs quant à la traduction du fonctionnement du système et faciles à appréhender et à manipuler par l'utilisateur. Le type d'automate utilisé par le procédé est assez classique ; l'invention réside essentiellement dans l'exploitation faite de cette modélisation par automates. Tous les éléments du système sont décrits sous la forme d'automates. Ces éléments, ou sous-systèmes, peuvent être des dispositifs appartenant au système, dont les automates représentent les états de fonctionnement. Ils peuvent également être de nature logicielle : instruction ou commande échangée, données, canaux de transmission (files d'attente, piles...).

Le système étudié étant décomposé en $N$ sous-systèmes, chacun de ces sous-systèmes $n$ ($1 \leq n \leq N$) est décrit sous la forme d'un automate $S_n$ à l'aide de paramètres définissant les états et les transitions de l'automate. Ces paramètres comprennent :

- le nombre $I(n)$ d'états de l'automate $S_n$ ; on note

$$E_n = \left\{ e_n^i \ , \ 1 \leq i \leq I(n) \right\}$$

l'ensemble des $I(n)$ états de l'automate $S_n$ ;

- le nombre $J(n)$ de transitions de l'automate $S_n$ ; on note

$$A_n = \left\{ a_n^j \ , \ 1 \leq j \leq J(n) \right\}$$

l'ensemble des $J(n)$ transitions de l'automate $S_n$ ;

- pour chaque transition $a_n^j$ : l'identification de l'état $e^i$ d'où provient cette transition, et de l'état $e^{i'}$ auquel conduit cette transition. En d'autres termes, la transition $a_n^j$ fait passer le sous-système représenté par l'automate $S_n$ de

l'état $e_n^i$ à l'état $e_n^{i'}$.

Ces paramètres permettent de déterminer deux ensembles $B^i$ et $C^i$ pour chaque état $e_n^i$ de l'ensemble $E_n$ ($1 \leq i \leq I(n)$). L'ensemble $B_n^i$ est l'ensemble des index $j$ tels que $1 \leq j \leq J(n)$ et que la transition $a_n^j$ provienne de l'état de départ $e_n^i$. L'ensemble $C_n^i$ est l'ensemble des index $j$ tels que $1 \leq j \leq J(n)$ et que la transition $a_n^j$ conduise à l'état d'arrivée $e_n^i$.

Il est fait appel à un ordinateur pour la mise en oeuvre des calculs requis par le procédé selon l'invention. Typiquement, cet ordinateur sera équipé d'une interface graphique permettant à l'utilisateur de fournir simplement les paramètres énumérés ci-dessus, définissant la structure des automates, en dessinant des noeuds représentant les états $e_n^i$, reliés entre eux par des arcs représentant les transitions $a_n^j$. La formation des ensembles $B_n^i$ et $C_n^i$ peut alors avoir lieu au fur et à mesure de l'introduction des états et transitions.

A partir de ces ensembles et d'un nombre entier $T$ fourni par l'utilisateur, l'ordinateur construit

$$n_f = 2T \times \sum_{n=1}^{N} I(n)$$

équations de flot. Le nombre $T$ représente un nombre d'étapes successives de fonctionnement du système, sur lesquelles ce fonctionnement fait l'objet de la vérification.

Les expressions de ces équations de flot sont, pour $1 \leq t \leq T$, $1 \leq n \leq N$ et $1 \leq i \leq I(n)$ :

$$e_n^i(t-1) = \sum_{j \in B_n^i} a_n^j(t) \qquad (1f)$$

$$e_n^i(t) = \sum_{j \in C_n^i} a_n^j(t) \qquad (2f)$$

Dans ces équations de flot (1f) et (2f), les variables $e_n^i(t)$ et $a_n^j(t)$ sont en principe à valeur binaire (0 ou 1). Quand $e_n^i(t)=1$ ($0 \leq t \leq T$), le sous-système $n$ décrit par l'automate $S_n$ est dans l'état $e_n^i$ à l'issue de l'étape $t$ et au début de l'étape $t+1$ ; sinon, $e_n^i(t) = 0$. Quand $a_n^j(t)=1$ ($1 \leq t \leq T$), le sous-système $n$ décrit par l'automate $S_n$ change d'état conformément à la transition $a_n^j$ lors de l'étape $t$ ; sinon, $a_n^j(t)=0$.

Le système d'automates

$$S = \left\{ S_n \,, 1 \leq n \leq N \right\}$$

est synchronisé par un ensemble

$$M = \left\{ m^k \,, 1 \leq k \leq K \right\}$$

de messages traduisant l'interfonctionnement des $N$ sous-systèmes. Les messages $m^k$ de l'ensemble $M$ sont reçus ou émis par les sous-systèmes représentés par les automates $S_n$ lorsque ceux-ci effectuent des transitions des ensembles $A_n$. Les messages de synchronisation $m^k$ accompagnent donc les transitions $a_n^j$, de sorte que leur apparition peut se modéliser à l'aide des automates $S_n$. Ceci consiste, pour l'utilisateur, à associer chaque transition $a_n^j$ de l'ensemble $A_n$ des transitions d'un automate $S_n$ à un sous-ensemble $M_n^j$ de l'ensemble $M$ des messages de synchronisation. Cette association signifie que chaque message du sous-ensemble $M_n^j$ survient lorsque le sous-système décrit par l'automate $S_n$ change d'état conformément à la transition $a_n^j$. Lorsqu'une transition $a_n^j$ d'un automate $S_n$ est franchie, tout autre automate $S_{n'}$ ayant une ou plusieurs transitions $a_{n'}^{j'}$, telles que $M_{n'}^{j'} \cap M_n^j \neq \varnothing$ accomplit l'une de ces transitions $a_{n'}^{j'}$.

Cette association est aisée à définir lorsqu'une interface graphique de l'ordinateur met à disposition de l'utilisateur une représentation graphique des états et transitions de l'automate : il suffit d'étiqueter chaque arc représentant une transition avec le ou les messages $m^k$ qui l'accompagnent. L'ordinateur est alors en mesure de définir les sous-ensembles $M^j$ pertinents. Il définit en outre, pour chaque automate $S_n$, la réunion $M_n$ des sous-ensembles de messages $M^j_n$ respectivement associés aux transitions de l'ensemble $A_n$ , soit

$$M_n = \bigcup_{j=1}^{J(n)} M^j_n \ .$$

On note $\mu(n)$ le nombre de messages de l'ensemble $M_n$. Il définit enfin, pour chaque message $m^k$ de l'ensemble $M_n$, l'ensemble $D^k_n$ des index $j$ tels que $1 \leq j \leq J(n)$ et que le message $m^k$ appartienne au sous-ensemble $M^j_n$ associé à la transition $a^j_n$, soit

$$D^k_n = \left\{ \ j \ / \ m^k \in M^j_n \right\} \ .$$

Certaines transitions $a^j_n$ peuvent n'être accompagnées par aucun message de l'ensemble $M$ ($M^j_n = \varnothing$). Le plus souvent, ces transitions auront des états de départ et d'arrivée identiques, ce qui traduit le fait que le sous-système en question ne change pas d'état en l'absence de messages. Dans la suite, on supposera qu'il existe une telle transition, dite arc $\varepsilon$, pour chacun des états de chaque automate, et on notera $\varepsilon_n$ l'ensemble des index des $I(n)$ arcs $\varepsilon$ relatifs à l'automate $S_n$ :

$$\varepsilon_n = \left\{ j \in \left[1, J(n)\right] \ / \ M^j_n = \varnothing \right\} \ .$$

Mais on observera que cette supposition ne correspond qu'à un cas particulier auquel l'invention n'est pas limitée.
A partir des ensembles $D^k_n$ définis par les relations de synchronisation, l'ordinateur construit

$$n_s = T \times \sum_{n=1}^{N} \mu(n)$$

équations de synchronisation, dont les expressions sont, pour $1 \leq t \leq T$, $1 \leq n \leq N$ et $m^k \in M_n$ :

$$m^k(t) = \sum_{j \in D^k_n} a^j_n(t) \qquad\qquad (3s)$$

où $m^k(t)$ est une variable en principe binaire (0 ou 1). Quand $m^k(t) = 1$, le message $m^k$ survient pendant l'étape $t$ ; sinon, $m^k(t)=0$.
Les équations de flot et de synchronisation (1f), (2f) et (3s) forment un système linéaire dont les variables $e^i_n(t)$, $a^j_n(t)$ et $m^k(t)$ constituent les inconnues. Conformément à l'invention, on cherche à résoudre ce système linéaire par une méthode de programmation linéaire, pour vérifier des propriétés du système définies sous la forme de contraintes linéaires supplémentaires imposées aux inconnues de ce système linéaire. Dans cette résolution, on fait l'hypothèse que les inconnues $e^i_n(t)$, $a^j_n(t)$, $m^k(t)$ sont à valeurs positives ou nulles, mais non nécessairement entières.
Les méthodes de résolution par programmation linéaire sont très classiques dans le domaine de l'optimisation combinatoire. Elles sont largement utilisées dans l'industrie grâce à leur efficacité et à l'étendue de leur champ d'application (voir par exemple Williams : « Model Building in Mathematical Programming, » Wiley, 3e édition, 1993 ; Chvatal : « Linear Programming », Editions Freeman, 1983 ; ou encore R. Saigal : « Linear Programming : A Modern Integrated Analysis », Editions Kluwer, 1996).

Actuellement, des logiciels, tels que ceux commercialisés sous les appellations CPLEX et OSL, peuvent traiter en un temps raisonnable des systèmes de plusieurs millions de contraintes et dizaines de millions de variables. La complexité des algorithmes existants, qu'ils soient de type simplexe ou par points intérieurs, se situe entre le linéaire et le quadratique en la taille du problème (c'est-à-dire qu'un problème deux fois plus grand prendra entre deux et quatre fois plus de temps pour être résolu). Mais sachant qu'en pratique, il est possible d'utiliser de nombreuses astuces d'optimisation, des gains considérables peuvent être obtenus sur ces temps de calcul.

La programmation linéaire regroupe les méthodes permettant de trouver une solution positive assujettie à un ensemble de contraintes linéaires, et qui maximise un critère défini par une équation linéaire donnée. Voici une manière classique d'exprimer ce genre de problème : on cherche un vecteur colonne $x$ de taille $p$ tel que :

$$\begin{cases} \max c \cdot x \\ A \cdot x = b \\ x \geq 0 \end{cases} \qquad (4)$$

où $A$ est une matrice à $m$ lignes et $p$ colonnes, $c$ un vecteur ligne de taille p, et b un vecteur colonne de taille $m$. Il est possible de modifier ce problème en y intégrant des inéquations, en enlevant certaines contraintes de positivité sur $x$, etc. Mais la linéarité de l'ensemble des équations doit être conservée, à la fois pour pouvoir utiliser un algorithme efficace et pour permettre d'interpréter les résultats. Les contraintes d'intégrité (cela correspond à faire de la programmation entière) sont à bannir pour les mêmes raisons.

Pour comprendre la notion de preuve de programmation linéaire, le problème est plutôt formulé comme suit. On cherche toujours un vecteur $x$ de taille $p$, mais tel que :

$$\begin{cases} A \cdot x = b \\ x \geq 0 \end{cases} \qquad (5)$$

Ce problème (5) semble plus simple puisqu'on ne cherche qu'à satisfaire l'ensemble des contraintes, sans optimiser en outre un critère linéaire. Mais il est en fait de même difficulté que le problème (4). Ce problème (5) possède alors la propriété suivante, dite lemme de Farkas : le système $A.x = b$, $x \geq 0$ n'admet pas de solution si et seulement si le système dual $y.A \geq 0$, $y.b < 0$ en admet une.

Si on suppose que le système de contraintes $A$ est la traduction des automates décrits ci-dessus et d'une requête d'accessibilité à vérifier, le vecteur $x$ étant composé des inconnues $e_n^i(t)$, $a_n^j(t)$ et $m^k(t)$, le lemme de Farkas assure que : (i) soit il existe un chemin validant la requête, c'est-à-dire un vecteur colonne $x$ de taille $p$ solution du problème direct, (ii) soit il y a une preuve que ce chemin n'existe pas, c'est-à-dire un vecteur ligne $y$ de taille $m$ solution du problème dual. L'algorithme de programmation linéaire exécuté par l'ordinateur va donc trouver ce $x$, ou s'il n'existe pas, le $y$ correspondant.

Les contraintes linéaires supplémentaires sont définies par l'utilisateur en fonction de la propriété qu'il cherche à vérifier. En général, on prévoit des contraintes linéaires pour fixer une configuration initiale du système d'automates, c'est-à-dire les valeurs des variables $e_n^i(0)$ pour $1 \leq n \leq N$ et $1 \leq i \leq I(n)$. Plus généralement, l'état initial d'un automate $S_n$ fera l'objet de contraintes de la forme

$$\sum_{i \in P_n} e_n^i(0) = 1,$$

$$\sum_{i \notin P_n} e_n^i(0) = 0,$$

où $P_n$ désigne une partie non vide de l'intervalle [1, $I(n)$], qui imposent à l'état initial de l'automate d'être dans une certaine partie de l'ensemble $E_n$.

Les contraintes supplémentaires comprennent d'autres relations linéaires à satisfaire par les inconnues du système linéaire, se rapportant à l'état final (à $t=T$) de certains automates, à l'accomplissement de certaines transitions et/ou à l'émission de certains messages de l'ensemble $M$. Dans certains cas, des contraintes supplémentaires pourront en outre être définies en introduisant dans la modélisation un ou plusieurs automates spécifiques appelés automates observateurs.

Dans le cadre de l'invention, les contraintes supplémentaires peuvent encore inclure un critère linéaire à optimiser, c'est-à-dire que la programmation linéaire peut aussi être utilisée selon la formulation (4) ci-dessus. Ceci permet d'identifier le meilleur chemin au sens du critère optimisé. Des exemples de tels critères sont :

(i)

$$\sum_{t=1}^{T} \sum_{n=1}^{N} \sum_{j \in \mathcal{E}_n} a_n^j(t),$$

dont la maximisation permet d'identifier le chemin qui implique le moins de changements d'états ; la sommation pourrait également porter sur seulement une partie des automates $S_n$ ;

(ii)

$$\sum_{t=1}^{T} \sum_{k=1}^{K} m^k(t),$$

dont la minimisation permet d'identifier le chemin qui nécessite le moins d'envois de messages de synchronisation ; la sommation pourrait également porter sur seulement une partie de l'ensemble $M$ des messages $m^k$ ;

(iii)

$$\sum_{t=1}^{T} e_n^i(t),$$

dont la minimisation permet d'identifier le chemin pour lequel un automate $S_n$ reste le moins longtemps dans l'un de ses états $e_n^i$ ...

Dans les critères indiqués ci-dessus, les sommes pourraient encore être pondérées.

Dans certains cas, la programmation linéaire peut produire une solution non entière, au moins une des composantes du vecteur $x$ étant différente de 0 et de 1. Dans un tel cas, on ne peut pas conclure immédiatement sur la propriété examinée : soit il n'existe aucune solution entière et la propriété n'est pas vérifiée, soit la solution non entière cache une solution entière et la propriété est vérifiée.

Plusieurs approches sont possibles lorsqu'une solution non entière se présente. On peut ainsi affiner la requête en ajoutant ou en modifiant des contraintes linéaires avant de réitérer l'application de la méthode de résolution par programmation linéaire. L'utilisateur est en cela guidé par la structure de la solution non entière. Par exemple, si le chemin solution comporte la composante $m^k(t) = p/q$, $p$ et $q$ étant des entiers tels que $0 < p < q$, et si le message $m^k$ semble « parasite » vis-à-vis de la propriété examinée, on peut envisager d'ajouter une contrainte sur ce message

$$(\text{telle que} \quad \sum_{t=1}^{T} m^k(t) = 0).$$

Des contraintes du même genre peuvent être introduites si l'utilisateur détecte que, selon la solution non entière, certains automates se retrouvent dans un état suspect avec une variable d'état $e_n^i(t)$ fractionnaire, ou suivent une transition suspecte avec une variable de transition $a_n^j(t)$ fractionnaire... Fréquemment, cette façon de faire permettra d'obtenir une solution entière concluante. Dans certains cas, on pourra également réduire le nombre $T$ d'étapes de calcul, afin d'éliminer des solutions non entières dans lesquelles des transitions fractionnaires répétées sur plusieurs étapes sont susceptibles de constituer une transition complète. Pour s'affranchir de solutions non entières, on peut encore recourir à des critères linéaires à optimiser. Si la première résolution du système linéaire pour vérifier une propriété donne lieu à une solution non entière, on peut rechercher d'autres solutions du même système qui optimisent divers critères linéaires. Certaines de ces autres solutions peuvent être entières et donc prouver la propriété recherchée. Sinon les différents essais peuvent aider à diagnostiquer que la propriété n'est pas vérifiée.

Une solution non entière peut encore apparaître lorsque certains défauts de modélisation sont présents dans le système d'automates synchronisés. La structure de la solution non entière peut aider l'utilisateur à détecter ces défauts et à y remédier par une modification appropriée des paramètres décrivant le système.

On va maintenant illustrer le procédé à l'aide d'un exemple représenté sur les dessins annexés. Cet exemple est délibérément très simplifié pour illustrer aussi clairement que possible les opérations effectuées conformément à l'invention. On comprendra que la puissance des méthodes de programmation linéaire permet, en pratique de vérifier des systèmes de taille beaucoup plus importante.

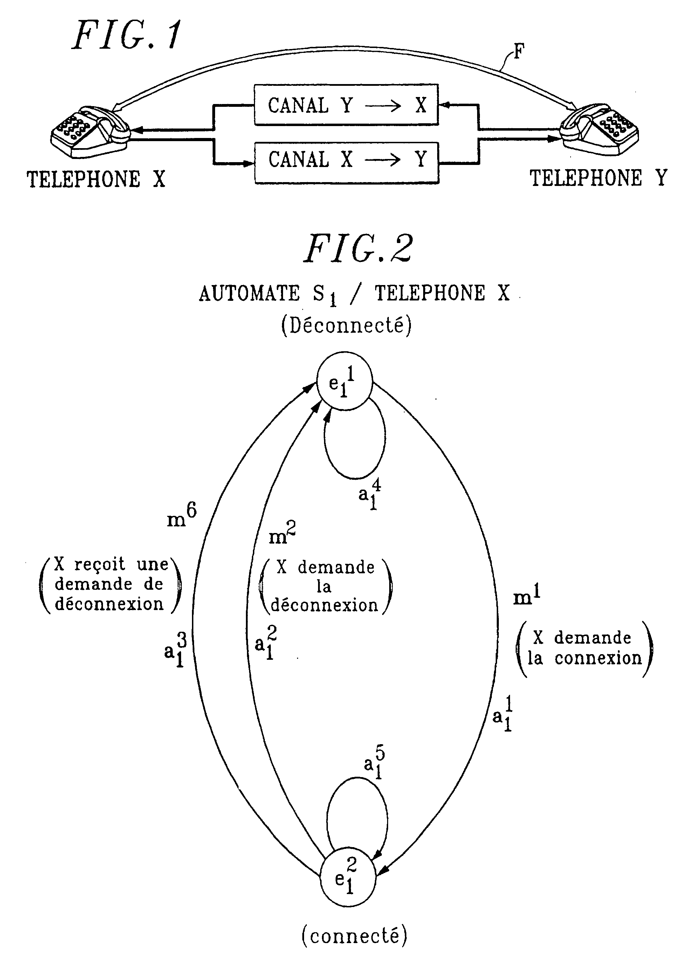

Le système étudié, représenté schématiquement sur la figure 1, est un système de télécommunication constitué de deux téléphones X et Y entre lesquels peut s'établir une communication de phonie, comme schématisé par la flèche F. Le fonctionnement qu'on cherche à vérifier se rapporte au protocole de signalisation entre les deux téléphones, servant à établir ou faire cesser une communication. La première étape consiste à décomposer le système en $N$=4 sous-systèmes correspondant respectivement aux téléphones X et Y, à un canal de transmission du téléphone X vers le téléphone Y, et à un canal de transmission du téléphone Y vers le téléphone X.

On suppose, pour simplifier, que seul le téléphone X est habilité à demander l'établissement d'une connexion avec le téléphone Y, alors que la déconnexion peut être demandée par l'un ou l'autre des deux téléphones. Dans ces conditions, l'ensemble $M$ des messages de synchronisation se compose de six messages ($K$=6) :

- $m^1$ émis par le téléphone X pour demander l'établissement d'une connexion avec Y ;
- $m^2$ émis par le téléphone X pour demander la déconnexion ;
- $m^3$ émis par le téléphone Y pour demander la déconnexion ;
- $m^4$ reçu par le téléphone Y pour provoquer sa connexion avec X ;
- $m^5$ reçu par le téléphone Y pour provoquer sa déconnexion ; et
- $m^6$ reçu par le téléphone X pour provoquer sa déconnexion.

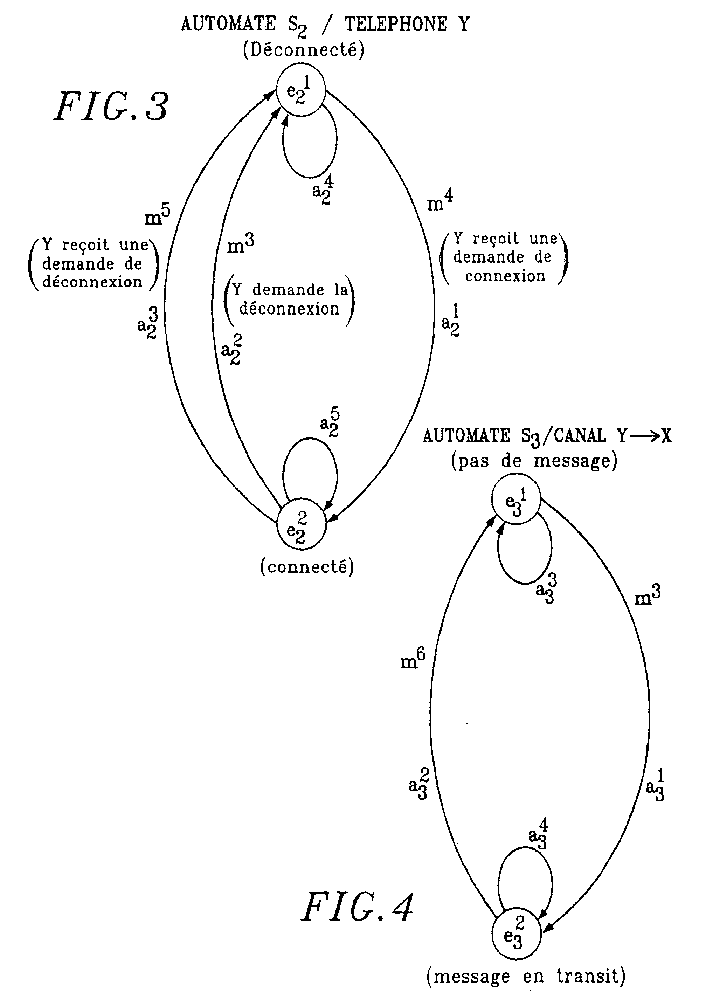

Les automates synchronisés $S_1$ et $S_2$ relatifs aux téléphones X et Y sont représentés sur les figures 2 et 3. Ils comportent chacun deux états (« connecté » et « déconnecté ») et cinq transitions : $I(1)=I(2)=2$, $J(1)=J(2)=5$. Ces deux automates introduisent les équations suivantes dans le système linéaire à résoudre :

Équations de flot : ($n$=1 ou 2)

$$B_n^1 = \{1,4\} \rightarrow e_n^1(t\text{-}1) = a_n^1(t) + a_n^4(t) \tag{1f}$$

$$B_n^2 = \{2,3,5\} \rightarrow e_n^2(t\text{-}1) = a_n^2(t) + a_n^3(t) + a_n^5(t) \tag{1f}$$

$$C_n^1 = \{2,3,4\} \rightarrow e_n^1(t) = a_n^2(t) + a_n^3(t) + a_n^4(t) \tag{2f}$$

$$C_n^2 = \{1,5\} \rightarrow e_n^2(t) = a_n^1(t) + a_n^5(t) \tag{2f}$$

Equations de synchronisation :

$$M_1 = \left\{m^1, m^2, m^6\right\}, \qquad D_1^1 = \{1\} \qquad \rightarrow \qquad m^1(t) = a_1^1(t) \qquad (3s)$$

$$D_1^2 = \{2\} \qquad \rightarrow \qquad m^2(t) = a_1^2(t) \qquad (3s)$$

$$D_1^6 = \{3\} \qquad \rightarrow \qquad m^6(t) = a_1^3(t) \qquad (3s)$$

$$M_2 = \left\{m^3, m^4, m^5\right\}, \qquad D_2^3 = \{2\} \qquad \rightarrow \qquad m^3(t) = a_2^2(t) \qquad (3s)$$

$$D_2^4 = \{1\} \qquad \rightarrow \qquad m^4(t) = a_2^1(t) \qquad (3s)$$

$$D_2^5 = \{3\} \qquad \rightarrow \qquad m^5(t) = a_2^3(t) \qquad (3s)$$

Le canal de transmission du téléphone Y vers le téléphone X est simple : il fait uniquement transiter le message de déconnexion de Y vers X. Il est représenté par un automate $S_3$ comportant deux états et quatre transitions ($I$(3)=2, $J$(3)=4), comme représenté sur la figure 4. Cet automate introduit les équations suivantes dans le système linéaire à résoudre :

Equations de flot :

$$B_3^1 = \{1,3\} \rightarrow e_3^1(t\text{-}1) = a_3^1(t) + a_3^3(t) \tag{1f}$$

$$B_3^2 = \{2,4\} \rightarrow e_3^2(t\text{-}1) = a_3^2(t) + a_3^4(t) \tag{1f}$$

$$C_3^1 = \{2,3\} \rightarrow e_3^1(t) = a_3^2(t) + a_3^3(t) \tag{2f}$$

$$C_3^2 = \{1,4\} \rightarrow e_3^2(t) = a_3^1(t) + a_3^4(t) \tag{2f}$$

Equations de synchronisation :

$$M_3 = \left\{m^3, m^6\right\}, \qquad D_3^3 = \{1\} \qquad \rightarrow \qquad m^3(t) = a_3^1(t) \qquad (3s)$$

$$D_3^6 = \{2\} \qquad \rightarrow \qquad m^6(t) = a_3^2(t) \qquad (3s)$$

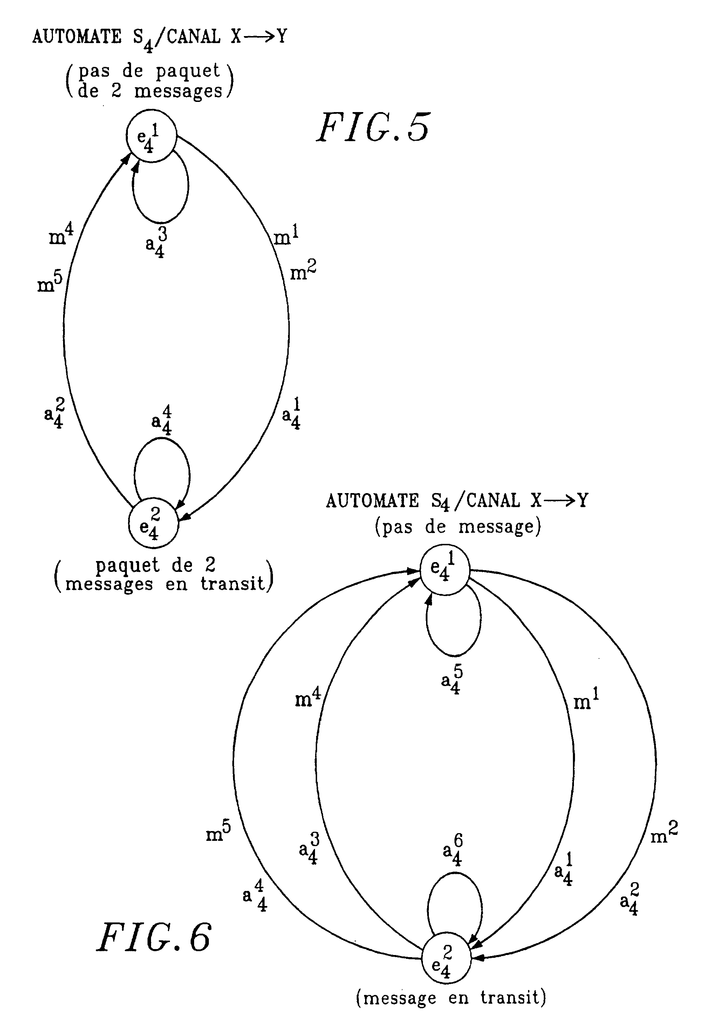

Pour le canal de transmission du téléphone X vers le téléphone Y, trois cas différents sont envisagés sur les figures 5, 6 et 7.

On considère d'abord le cas de la figure 5, où le canal n'accepte de faire transiter des messages que par paquets de deux (par exemple pour des raisons d'efficacité de la transmission). Après avoir reçu le paquet constitué par les deux messages $m^1$ et $m^2$ (transition $a_4^1$), le canal retransmet les deux messages correspondants $m^4$ et $m^5$ vers le téléphone Y (transition $a_4^2$). On note que cette transmission est modélisée comme étant asynchrone puisque l'automate $S_4$ est autorisé à rester dans l'état $e_4^2$ selon un arc $\varepsilon$ (transition $a_4^4$) . Pour modéliser une transmission synchrone, il suffirait de supprimer cette transition $a_4^4$ de l'ensemble $A_4$ des transitions de l'automate. L'automate $S_4$ de la figure 5 comporte deux états et quatre transitions ($I(4)=2$, $J(4)=4$). Il introduit les équations suivantes dans le système linéaire à résoudre :

Equations de flot :

$$B_4^1 = \{1,3\} \rightarrow e_4^1(t\text{-}1) = a_4^1(t) + a_4^3(t) \tag{1f}$$

$$B_4^2 = \{2,4\} \rightarrow e_4^2(t\text{-}1) = a_4^2(t) + a_4^4(t) \tag{1f}$$

$$C_4^1 = \{2,3\} \rightarrow e_4^1(t) = a_4^2(t) + a_4^3(t) \tag{2f}$$

$$C_4^2 = \{1,4\} \rightarrow e_4^2(t) = a_4^1(t) + a_4^4(t) \tag{2f}$$

Equations de synchronisation :

$$M_4 = \left\{ m^1, m^2, m^4, m^5 \right\}, \quad D_4^1 = \{1\} \quad \rightarrow \quad m^1(t) = a_4^1(t) \tag{3s}$$

$$D_4^2 = \{1\} \quad \rightarrow \quad m^2(t) = a_4^1(t) \tag{3s}$$

$$D_4^4 = \{2\} \quad \rightarrow \quad m^4(t) = a_4^2(t) \tag{3s}$$

$$D_4^5 = \{2\} \quad \rightarrow \quad m^5(t) = a_4^2(t) \tag{3s}$$

Une première série de propriétés du système qu'on peut vérifier est le fait que chaque état de fonctionnement d'un sous-système $n$, représenté par un état de l'automate correspondant $S_n$ peut être atteint à partir d'une configuration de départ donnée, et que chaque message de synchronisation de l'ensemble $M$ peut survenir.

La configuration de départ est par exemple : les deux téléphones déconnectés et aucun message en transit dans les canaux : ceci correspond aux contraintes linéaires supplémentaires suivantes pour $1 \leq n \leq 4$ , $e_n^1(0)=1$ et $e_n^2(0)=0$.

Pour vérifier si l'état $e_n^i$ d'un automate $S_n$ peut être atteint, on impose la contrainte supplémentaire $e_n^i(T)=1$ en choisissant une valeur modérée du nombre $T$. Si la programmation linéaire fournit une solution, l'état $e_n^i$ est accessible. Sinon, il n'est pas accessible en $T$ étapes. Dans ce dernier cas, on peut augmenter la valeur du nombre $T$ pour rechercher l'existence éventuelle d'une solution. Si on considère que le nombre $T$ devient trop important sans qu'on trouve de solution, on peut diagnostiquer que la modélisation est incorrecte et y remédier, ou estimer que le système étudié ne fonctionne pas dans la mesure où l'un de ses états est inaccessible. Le système modélisé par les automates $S_1$ à $S_4$ des figures 2 à 5 ne vérifie pas cette propriété dès que l'état dont on examine l'accessibilité diffère de l'état initial : la programmation linéaire ne propose aucune solution. Ceci traduit le fait que le canal modélisé par l'automate

$S_4$ de la figure 5 est totalement bloquant puisque l'automate $S_1$ ne peut jamais émettre les messages $m^1$ et $m^2$ en même temps.

Le même genre de vérification peut être effectué pour la possibilité de décrire une transition donnée ou d'émettre un message donné. Par exemple, dans le cas de l'émission du message $m^5$ à partir de la configuration de départ ci-dessus, on ajoute la contrainte linéaire

$$\sum_{t=1}^{T} m^5(t) = 1$$

qui traduit le fait que le message $m^5$ aura été émis une fois parmi les $T$ étapes successives. Là encore, le système modélisé par les automates $S_1$ à $S_4$ des figures 2 à 5 ne vérifie pas cette propriété.

Dans le cas de la figure 6, le canal du téléphone X vers le téléphone Y permet de faire transiter l'un ou l'autre des messages de connexion et de déconnexion (par exemple parce que c'est un canal à faible débit). L'automate $S_4$ comporte alors deux états et six transitions ($I(4)=2$, $J(4)=6$). Il introduit les équations suivantes dans le système linéaire à résoudre :

Équations de flot :

$$B_4^1 = \{1,2,5\} \rightarrow e_4^1(t\text{-}1) = a_4^1(t) + a_4^2(t) + a_4^5(t) \tag{1f}$$

$$B_4^2 = \{3,4,6\} \rightarrow e_4^2(t\text{-}1) = a_4^3(t) + a_4^4(t) + a_4^6(t) \tag{1f}$$

$$C_4^1 = \{3,4,5\} \rightarrow e_4^1(t) = a_4^3(t) + a_4^4(t) + a_4^5(t) \tag{2f}$$

$$C_4^2 = \{1,2,6\} \rightarrow e_4^2(t) = a_4^1(t) + a_4^2(t) + a_4^6(t) \tag{2f}$$

Équations de synchronisation :

$$M_4 = \left\{ m^1, m^2, m^4, m^5 \right\} \quad D_4^1 = \{1\} \quad \rightarrow \quad m^1(t) = a_4^1(t) \tag{3s}$$

$$D_4^2 = \{2\} \quad \rightarrow \quad m^2(t) = a_4^2(t) \tag{3s}$$

$$D_4^4 = \{3\} \quad \rightarrow \quad m^4(t) = a_4^3(t) \tag{3s}$$

$$D_4^5 = \{4\} \quad \rightarrow \quad m^5(t) = a_4^4(t) \tag{3s}$$

Le système modélisé par les automates $S_1$ à $S_4$ des figures 2, 3, 4 et 6 vérifie la première série de propriétés évoquée ci-dessus.

Dans une deuxième phase de vérification, on peut examiner des propriétés plus complexes que la simple accessibilité d'un état, d'une transition ou d'un message. On peut par exemple rechercher si tout message reçu par un téléphone correspond bien à celui qui a été envoyé par l'autre téléphone.

Par exemple, pour tester que le message de demande de déconnexion par le téléphone X est toujours bien reçu par le téléphone Y, on peut examiner si la propriété inverse est vérifiée pour un certain chemin dans le modèle d'automates, en ajoutant les onze contraintes linéaires suivantes :

$$e_1^1(0)=e_2^1(0)=0, \; e_1^2(0)=e_2^2(0)=1 \qquad \text{(téléphones connectés à } t=0\text{)}$$

$$e_3^1(0)=e_4^1(0)=1, \; e_3^2(0)=e_4^2(0)=0 \qquad \text{(canaux vides à } t=0\text{)}$$

$$m^2(1) = 1 \qquad \text{(X demande la déconnexion à la 1}^\text{e}\text{ étape)}$$

$$\sum_{t=1}^{T} m^1(t) = 0 \qquad \text{(aucune connexion redemandée)}$$

$$\sum_{t=1}^{T} m^4(t) = 1 \qquad \text{(Y reçoit une demande de connexion)}$$

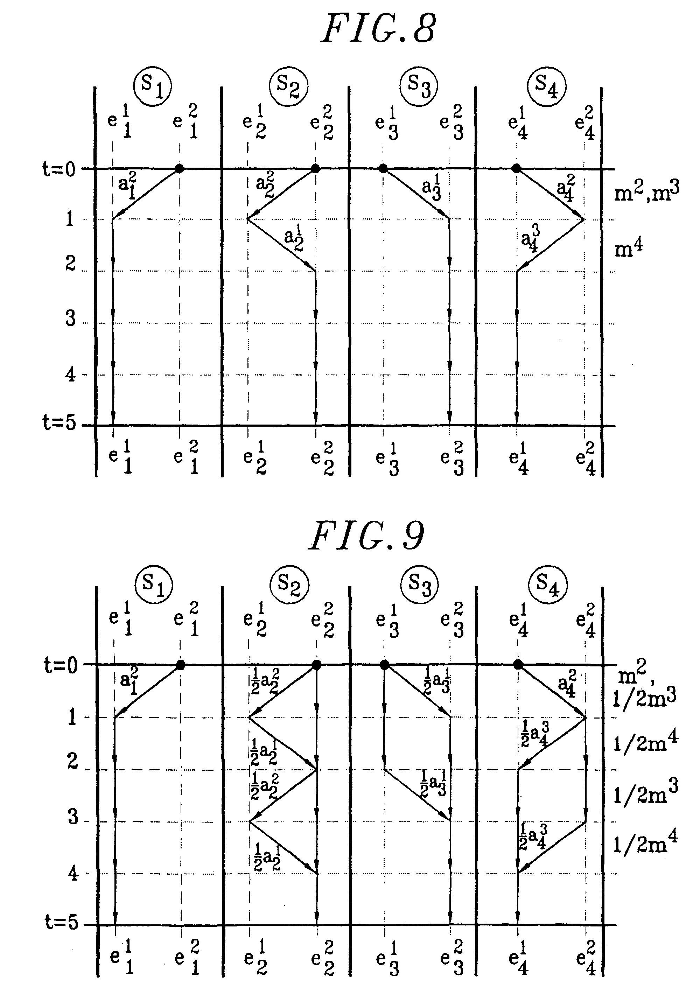

La figure 8 montre un chemin formant une solution en $T=5$ étapes du système linéaire soumis à ces onze contraintes supplémentaires, dans le cas du système modélisé par les automates $S_1$ à $S_4$ des figures 2, 3, 4, et 6. Comme la propriété vérifiée révèle un fonctionnement anormal du système, on peut déduire de l'existence de cette solution procurée par la programmation linéaire que le système modélisé fonctionne mal. L'utilisateur peut interpréter ce mauvais fonctionnement : le canal de X vers Y modélisé sur la figure 6 est susceptible d'introduire des erreurs, de sorte qu'il paraît nécessaire de faire la distinction entre les messages pour éviter ce type de mauvais fonctionnement.

La solution de la figure 8 n'est pas nécessairement fournie directement par la programmation linéaire. Le système linéaire soumis aux onze contraintes supplémentaires admet en effet des solutions non entières que la programmation linéaire est susceptible de produire dans un premier temps. Une telle solution non entière est illustrée par la figure 9. Si l'utilisateur obtient cette solution, il ne peut pas conclure immédiatement quant à la propriété examinée. Il peut par contre observer que les messages $m^3$ et $m^4$ semblent se dédoubler, et essayer de réduire le nombre $T$ d'étapes de fonctionnement. Pour $T=2$, une nouvelle résolution le conduira alors à la solution entière de la figure 8.

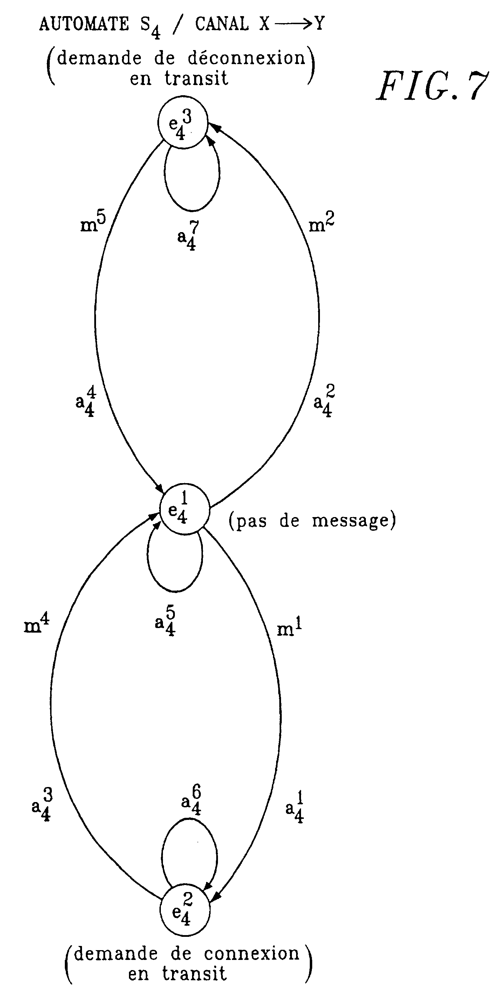

Dans le cas de la figure 7, le canal du téléphone X vers le téléphone Y permet de faire transiter l'un ou l'autre des messages de connexion et de déconnexion, en faisant la distinction entre ces deux messages. L'automate $S_4$ comporte alors trois états et sept transitions ($I(4)=3$, $J(4)=7$). Il introduit les équations suivantes dans le système linéaire à résoudre :

Équations de flot :

$$B_4^1 = \{1,2,5\} \rightarrow e_4^1(t\text{-}1) = a_4^1(t) + a_4^2(t) + a_4^5(t) \qquad \text{(1f)}$$

$$B_4^2 = \{3,6\} \rightarrow e_4^2(t\text{-}1) = a_4^3(t) + a_4^6(t) \qquad \text{(1f)}$$

$$B_4^3 = \{4,7\} \rightarrow e_4^3(t\text{-}1) = a_4^4(t) + a_4^7(t) \qquad \text{(1f)}$$

$$C_4^1 = \{3,4,5\} \rightarrow e_4^1(t) = a_4^3(t) + a_4^4(t) + a_4^5(t) \qquad \text{(2f)}$$

$$C_4^2 = \{1,6\} \rightarrow e_4^2(t) = a_4^1(t) + a_4^6(t) \tag{2f}$$

$$C_4^3 = \{2,7\} \rightarrow e_4^3(t) = a_4^2(t) + a_4^7(t) \tag{2f}$$

Equations de synchronisation :

$$M_4 = \left\{ m^1, m^2, m^4, m^5 \right\} \quad D_4^1 = \{1\} \quad \rightarrow \quad m^1(t) = a_4^1(t) \tag{3s}$$

$$D_4^2 = \{2\} \quad \rightarrow \quad m^2(t) = a_4^2(t) \tag{3s}$$

$$D_4^4 = \{3\} \quad \rightarrow \quad m^4(t) = a_4^3(t) \tag{3s}$$

$$D_4^5 = \{4\} \quad \rightarrow \quad m^5(t) = a_4^4(t) \tag{3s}$$

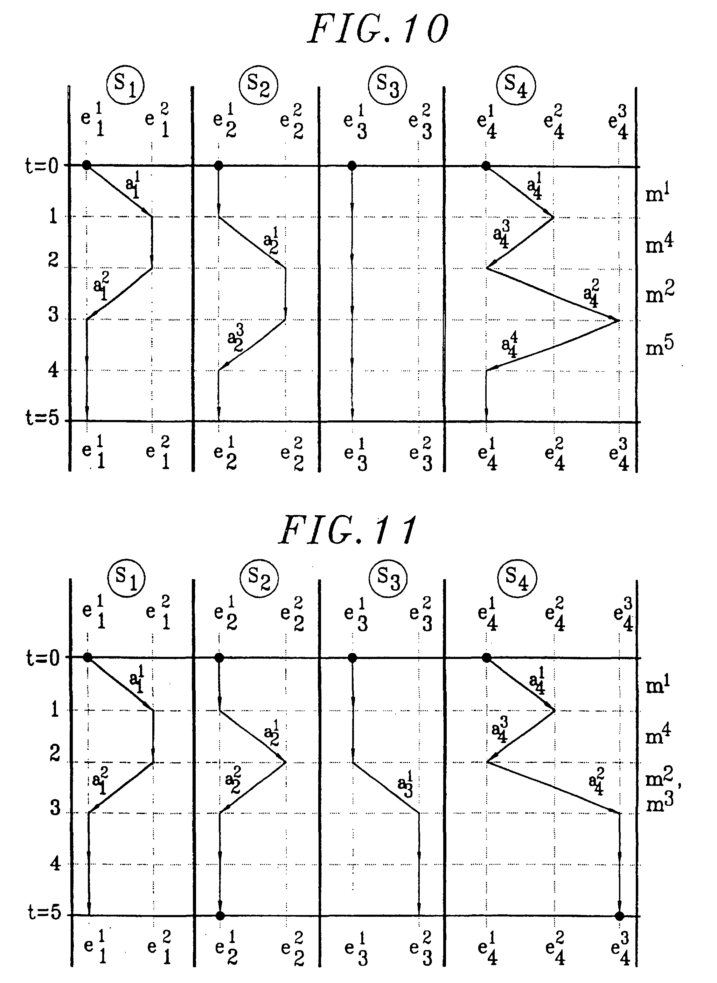

Le système modélisé par les automates $S_1$ à $S_4$ des figures 2, 3, 4 et 7 vérifie la première série de propriétés évoquée ci-dessus. La figure 10 illustre par exemple un chemin, correspondant à une solution trouvée par la programmation linéaire, qui prouve que le système est bien capable de générer le message $m^5$ en $T$=5 étapes depuis la configuration où les deux téléphones sont déconnectés (contraintes supplémentaires : $e_n^1(0)$=1, $e_n^2(0)$=0 ($1 \leq n \leq 4$), $e_4^3(0)$=0,

$$\sum_{t=1}^{T} m^5(t) = 1 ) .$$

Le système modélisé par les automates $S_1$ à $S_4$ des figures 2, 3, 4 et 7 ne vérifie pas les propriétés qui ont révélé le mauvais fonctionnement du système modélisé par les automates $S_1$ à $S_4$ des figures 2, 3, 4 et 6 (en particulier, la programmation linéaire ne fournit aucune solution au système linéaire assorti des onze contraintes supplémentaires évoquées ci-dessus).

Dans une troisième phase de vérification, on examine si le système peut se bloquer, c'est-à-dire si un canal peut avoir en transit un message que le téléphone destinataire est incapable de lire. Par exemple, pour déterminer si le canal de X vers Y est susceptible de contenir un message de demande de déconnexion alors que le téléphone Y est déconnecté, on utilise les contraintes supplémentaires :

$$e_1^1(0)=e_2^1(0)=1, \; e_1^2(0)=e_2^2(0)=0 \qquad \text{(téléphones déconnectés à } t\text{=0)}$$

$$e_3^1(0)=e_4^1(0)=1, \; e_3^2(0)=e_4^2(0)=e_4^3(0)=0 \qquad \text{(canaux vides à } t\text{=0)}$$

$$e_2^1(T)=1 \qquad \text{(téléphone Y déconnecté à } t\text{=}T\text{)}$$

$$e_4^3(T)=1 \qquad \text{(message de déconnexion en transit à } t\text{=}T\text{)}$$

La programmation linéaire montre que le système linéaire soumis à ces contraintes supplémentaires admet une solution entière, représentée sur la figure 11. Le système modélisé par les automates $S_1$ à $S_4$ des figures 2, 3, 4 et 7 risque donc de se bloquer. En analysant la solution de la figure 11, l'utilisateur peut se rendre compte de ce que le problème survient lorsque les deux téléphones demandent simultanément la déconnexion. Pour s'affranchir de ce genre de problème, il faut avoir recours à un protocole comportant des messages d'acquittement, ce qui implique de modifier chacun des automates de la modélisation et d'ajouter des messages dans l'ensemble $M$. Le procédé selon l'invention pourra à son tour être appliqué à cette nouvelle modélisation afin d'en examiner les propriétés.

**Revendications**

**1.** Procédé de vérification du fonctionnement d'un système modélisé par un système ($S$) d'automates synchronisés par un ensemble de messages ($M$), comprenant les opérations suivantes :

- on décompose le système en un nombre $N$ de sous-systèmes numérotés de $n=1$ à $n=N$ ;
- on fournit des paramètres décrivant chaque sous-système $n$, $1 \leq n \leq N$, sous forme d'un automate respectif ($S_n$) composé d'un ensemble $E_n$ d'états $e_n^i$ du sous-système $n$, avec un ensemble $A_n$ de transitions $a_n^j$ entre paires d'états de l'ensemble $E_n$, chaque transition $a_n^j$ de l'ensemble $A_n$ étant associée à un sous-ensemble $M_n^j$ de l'ensemble des messages de synchronisation ($M$) de façon à traduire le fait que chaque message du sous-ensemble $M_n^j$ survient lorsque le sous-système décrit change d'état conformément à la transition $a_n^j$ ;
- on construit un système d'équations linéaires (1f, 2f, 3s) comprenant, pour $1 \leq t \leq T$ et $1 \leq n \leq N$, d'une part des équations de flot de la forme :

$$e_n^i(t-1) \;=\; \sum_{j \,\in\, B_n^i} a_n^j(t) \quad \text{pour} \quad e_n^i \in E_n$$

et de la forme :

$$e_n^i(t) \;=\; \sum_{j \,\in\, C_n^i} a_n^j(t) \quad \text{pour} \quad e_n^i \in E_n \;,$$

et d'autre part des équations de synchronisation de la forme :

$$m^k(t) \;=\; \sum_{j \,\in\, D_n^k} a_n^j(t) \quad \text{pour} \quad m^k \in M_n \;,$$

où $T$ désigne un nombre d'étapes successives du fonctionnement du système, $B_n^i$ désigne l'ensemble des index $j$ tels que la transition $a_n^j$ de l'ensemble $A_n$ provienne de l'état $e_n^i$ de l'ensemble $E_n$, $C_n^i$ désigne l'ensemble des index $j$ tels que la transition $a_n^j$ de l'ensemble $A_n$ conduise à l'état $e_n^i$ de l'ensemble $E_n$, $M_n$ désigne la réunion des sous-ensembles de messages $M_n^j$ respectivement associés aux transitions de l'ensemble $A_n$, $D_n^k$ désigne l'ensemble des index $j$ tels qu'un message $m^k$ de l'ensemble $M_n$ appartienne au sous-ensemble $M_n^j$ associé à la transition $a_n^j$ de l'ensemble $A_n$, la variable $e^i(t)$, $0 \leq t \leq T$ est une inconnue du système linéaire associée à l'état $e_n^i$ de l'ensemble $E_n$ et à l'étape $t$, la variable $a_n^j(t)$ ($1 \leq t \leq T$) est une inconnue du système linéaire associée à la transition $a_n^j$ de l'ensemble $A_n$ et à l'étape $t$, la variable $m^k(t)$, $1 \leq t \leq T$, est une inconnue du système linéaire associée au message $m^k$ de l'ensemble ($M$) des messages de synchronisation et à l'étape $t$ ;
- on définit une propriété du système à vérifier, sous la forme de contraintes linéaires supplémentaires imposées aux inconnues du système linéaire ;
- on applique au système linéaire soumis aux contraintes supplémentaires une méthode de résolution par programmation linéaire ; et
- on analyse le résultat de la programmation linéaire pour déterminer si ladite propriété est vérifiée par le système.

**2.** Procédé selon la revendication 1, dans lequel on détermine que ladite propriété est vérifiée lorsque la programmation linéaire révèle que le système d'équations linéaires soumis aux contraintes supplémentaires a une solution dans laquelle chacune des variables $e_n^i(t)$, $a_n^j(t)$, $m^k(t)$ a soit la valeur 0 soit la valeur 1, et on détermine que ladite propriété n'est pas vérifiée lorsque la programmation linéaire révèle que le système d'équations linéaires soumis aux contraintes supplémentaires n'a pas de solution.

**3.** Procédé selon la revendication 1 ou 2, dans lequel, lorsque la programmation linéaire révèle que le système d'équations linéaires soumis aux contraintes supplémentaires a une solution dans laquelle l'une au moins des variables $e_n^i(t)$, $a_n^j(t)$, $m^k(t)$ a une valeur non entière, on modifie les contraintes supplémentaires, puis on réitère l'application de la méthode de résolution par programmation linéaire.

**4.** Procédé selon la revendication 1, 2 ou 3, dans lequel les contraintes linéaires supplémentaires comprennent une combinaison d'inconnues du système linéaire qui définit un critère linéaire à optimiser par la méthode de résolution par programmation linéaire.

**Claims**

**1.** Method of verifying the operation of a system modelled by a system ($S$) of automata synchronised by a set of messages ($M$), including the following operations:

- breaking down the system into $N$ subsystems numbered from $n=1$ to $n=N$;
- providing parameters describing each subsystem $n$, $1 \leq n \leq N$, in the form of a respective automaton ($S_n$) composed of a set $E_n$ of states $e_n^i$ in of the subsystem $n$ with a set $A_n$ of transitions $a_n^j$ between pairs of states of the set $E_n$, each transition $a_n^j$ of the set $A_n$ being associated with a subset $M_n^j$ of the set of synchronisation messages ($M$) to translate the fact that each message of the subset $M_n^j$ arises when the subsystem described changes state in accordance with the transition $a_n^j$ ;
- constructing a system of linear equations (1f, 2f, 3s) including, for $1 \leq t \leq T$ and $1 \leq n \leq N$, on the one hand flow equations of the form:

$$e_n^i(t-1) = \sum_{j \in B_n^i} a_n^j(t) \qquad \text{for } e_n^i \in E_n$$

and of the form:

$$e_n^i(t) = \sum_{j \in C_n^i} a_n^j(t) \qquad \text{for } e_n^i \in E_n \,,$$

and on the other hand synchronisation equations of the form:

$$m^k(t) = \sum_{j \in D_n^k} a_n^j(t) \qquad \text{for } m^k \in M_n \,,$$

where $T$ designates a number of successive steps of the operation of the system, $B_n^i$ designates the set of the indices $j$ such that the transition $a_n^j$ of the set $A_n$ starts from the state $e_n^i$ of the set $E_n$, $C_n^i$ designates the set of the indices $j$ such that the transition $a_n^j$ of the set $A_n$ leads to the state $e_n^i$ of the set $E_n$, $M_n$ designates the union of the subsets of messages $M_n^j$ respectively associated with the transitions of the set $A_n$, $D_n^k$ designates the set of the indices $j$ such that a message $m^k$ of the set $M_n$ belongs to the subset $M_n^j$ associated with

the transition $a^j$ of the set $A_n$, the variable $e^i_n(t)$, $0 \leq t \leq T$, is an unknown of the linear system associated with the state $e^i_n$ of the set $E_n$ and with step $t$, the variable $a^j_n(t)$ ($1 \leq t \leq T$) is an unknown of the linear system associated with the transition $a^j_n$ of the set $A_n$ and with step $t$, the variable $m^k(t)$, $1 \leq t \leq T$, is an unknown of the linear system associated with the message $m^k$ of the set ($M$) of synchronisation messages and with step $t$;

- defining a property of the system to be verified in the form of additional linear constraints imposed on the unknowns of the linear system;
- applying a linear programming solution method to the linear system subject to the additional constraints; and
- analysing they result of linear programming to determine if said property is verified by the system.

2. Method according to claim **1** wherein said property is considered to be verified when linear programming reveals that the system of linear equations subject to the additional constraints has a solution in which each of the variables $e^i_n(t)$, $a^j_n(t)$, $m^k(t)$ has either the value 0 or the value 1, and said property is considered not to be verified if linear programming reveals that the system of linear equations subject to the additional constraints has no solution.

3. Method according to claim 1 or 2 wherein if linear programming reveals that the system of linear equations subject to the additional constraints has a solution in which at least one of the variables $e^i_n(t)$, $a^j_n(t)$, $m^k(t)$ has a non-integer value the additional constraints are modified and the linear programming solution method is applied again.

4. Method according to claim 1, 2 or 3 wherein the additional linear constraints comprise a combination of unknowns of the linear system which defines a linear criterion to be optimised by the linear programming solution method.


**Patentansprüche**

1. Verfahren zur Funktionsverifizierung eines Systems, das durch ein System ($S$) von Automaten modelliert wird, die durch eine Nachrichtenmenge ($M$) synchronisiert werden, umfassend die folgenden Operationen:

- man zerlegt das System in eine Anzahl $N$ von Untersystemen, die von $n$=1 bis $n$=$N$ numeriert sind;
- man liefert Parameter, die jedes Untersystem $n$, $1 \leq n \leq N$, in Form eines betreffenden Automaten ($S_n$) beschreiben, der aus einer Menge $E_n$ von Zuständen $e^i$ des Untersystems $n$ zusammengesetzt ist, mit einer Menge $A_n$ von Übergängen $a^j$ zwischen Zustandspaaren der Menge $E_n$, wobei jeder Übergang $a^j_n$ der Menge $A_n$ einer Untermenge $M^j_n$ der Synchronisierungsnachrichtenmenge ($M$) zugeordnet ist, so daß die Tatsache wiedergegeben wird, daß jede Nachricht der Untermenge $M^j_n$ erscheint, wenn das Untersystem den Zustandswechsel entsprechend dem Übergang $a^j_n$ beschreibt;
- man konstruiert ein System linearer Gleichungen (1f, 2f, 3s), das für $1 \leq t \leq T$ und $1 \leq n \leq N$ einerseits Mengengleichungen der Form

$$e^i_n(t-1) = \sum_{j \in B^i_n} a^j_n(t) \quad f\ddot{u}r \quad e^i_n \in E_n$$

und der Form

$$e^i_n(t) = \sum_{j \in C^i_n} a^j_n(t) \quad f\ddot{u}r \quad e^i_n \in E_n ,$$

und andererseits Synchronisierungsgleichungen der Form

$$m^k(t) = \sum_{j \in D^k_n} a^j_n(t) \quad f\ddot{u}r \quad m^k \in M_n ,$$

enthält, wobei $T$ eine Anzahl aufeinanderfolgender Funktionsschritte des Systems bezeichnet, $B^i_n$ die Menge der Indexe $j$ bezeichnet, die so beschaffen sind, daß der Übergang $a^j_n$ der Menge $A_n$ vom Zustand $e^i_n$ der Menge $E_n$ stammt, $C^i_n$ die Menge der Indexe $j$ bezeichnet, die so beschaffen sind, daß der Übergang $a^n_n$ der Menge $A_n$ zum Zustand $e^i_n$ der Menge $E_n$ führt, $M_n$ die Vereinigung der Nachrichtenuntermengen $M^j_n$ bezeich-

net, die jeweils den Übergängen der Menge $A_n$ zugeordnet sind, $D^k$ die Menge der Indexe $j$ bezeichnet, die so beschaffen sind, daß eine Nachricht $m^k$ der Menge $M_n$ zur Untermenge $M_n^j$ gehört, die dem Übergang $a_n^j$ der Menge $A_n$ zugeordnet ist, die Variable $e_n^i(t)$, $0 \leq t \leq T$, eine Unbekannte des linearen Systems ist, die dem Zustand $e_n^i$ der Menge $E_n$ und dem Schritt $t$ zugeordnet ist, die Variable $a_n^j(t)$, $1 \leq t \leq T$, eine Unbekannte des linearen Systems ist, die dem Übergang $a_n^j$ der Menge $A_n$ und dem Schritt $t$ zugeordnet ist, die Variable $m^k(t)$, $1 \leq t \leq T$, eine Unbekannte des linearen Systems ist, das der Nachricht $m^k$ der Menge $(M)$ der Synchronisierungsnachrichten und dem Schritt $t$ zugeordnet ist;

- man definiert eine Eigenschaft des zu verifizierenden Systems in Form von zusätzlichen linearen Bedingungen, die den Unbekannten des linearen Systems auferlegt sind;

- man wendet auf das lineare System, das den zusätzlichen Bedingungen unterworfen ist, eine Lösungsmethode durch lineare Programmierung an; und

- man analysiert das Ergebnis der linearen Programmierung, um zu ermitteln, ob die genannte Eigenschaft durch das System verifiziert ist.

2. Verfahren nach Anspruch 1, bei dem bestimmt wird, daß die genannte Eigenschaft verifiziert ist, wenn die lineare Programmierung aufzeigt, daß das die zusätzlichen Bedingungen befolgende System linearer Gleichungen eine Lösung hat, bei der jede der Variablen $e_n^i(t)$, $a_n^j(t)$, $m^k(t)$ entweder den Wert 0 oder den Wert 1 hat, und bei dem bestimmt wird, daß die genannte Eigenschaft nicht verifiziert ist, wenn die lineare Programmierung aufzeigt, daß das die zusätzlichen Bedingungen befolgende System linearer Gleichungen keine Lösung hat.

3. Verfahren nach Anspruch 1 oder 2, bei dem, wenn die lineare Programmierung aufzeigt, daß das die zusätzlichen Bedingungen befolgende System linearer Gleichungen eine Lösung hat, bei der wenigstens eine der Variablen $e_n^i(t)$, $a_n^j(t)$, $m^k(t)$ einen nichtganzzahligen Wert hat, die zusätzlichen Bedingungen geändert werden und dann die Anwendung der Lösungsmethode durch lineare Programmierung wiederholt wird.

4. Verfahren nach Anspruch 1, 2 oder 3, bei dem die zusätzlichen linearen Bedingungen eine Kombination von Unbekannten des linearen Systems umfassen, die ein lineares Kriterium definiert, das durch die Lösungsmethode durch lineare Programmierung zu optimieren ist.

## FIG.1

CANAL Y $\longrightarrow$ X

CANAL X $\longrightarrow$ Y

F

TELEPHONE X

TELEPHONE Y

## FIG.2

AUTOMATE $S_1$ / TELEPHONE X
(Déconnecté)

$e_1^1$

$a_1^4$

$m^6$

$\begin{pmatrix} \text{X reçoit une} \\ \text{demande de} \\ \text{déconnexion} \end{pmatrix}$

$a_1^3$

$m^2$

$\begin{pmatrix} \text{X demande} \\ \text{la} \\ \text{déconnexion} \end{pmatrix}$

$a_1^2$

$m^1$

$\begin{pmatrix} \text{X demande} \\ \text{la connexion} \end{pmatrix}$

$a_1^1$

$a_1^5$

$e_1^2$

(connecté)

AUTOMATE $S_2$ / TELEPHONE Y
(Déconnecté)

*FIG.3*

$e_2^1$

$a_2^4$

$m^5$

$\left(\begin{array}{l}\text{Y reçoit une}\\\text{demande de}\\\text{déconnexion}\end{array}\right)$

$m^3$

$\left(\begin{array}{l}\text{Y demande la}\\\text{déconnexion}\end{array}\right)$

$m^4$

$\left(\begin{array}{l}\text{Y reçoit une}\\\text{demande de}\\\text{connexion}\end{array}\right)$

$a_2^3$

$a_2^2$

$a_2^1$

$a_2^5$

AUTOMATE $S_3$/CANAL Y$\longrightarrow$X
(pas de message)

$e_3^1$

$a_3^3$

$m^3$

$e_2^2$

(connecté)

$m^6$

$a_3^2$

$a_3^1$

$a_3^4$

*FIG.4*

$e_3^2$

(message en transit)

EP 1 034 476 B1

AUTOMATE $S_4$/CANAL X$\longrightarrow$Y
(pas de paquet de 2 messages)

*FIG.5*

$e_4^1$

$m^4$

$m^5$

$a_4^3$

$m^1$

$m^2$

$a_4^2$

$a_4^4$

$a_4^1$

$e_4^2$

(paquet de 2 messages en transit)

AUTOMATE $S_4$/CANAL X$\longrightarrow$Y
(pas de message)

$e_4^1$

$m^4$

$a_4^5$

$m^1$

$m^5$

$a_4^3$

$a_4^6$

$a_4^1$

$m^2$

$a_4^4$

$a_4^2$

*FIG.6*

$e_4^2$

(message en transit)

AUTOMATE $S_4$ / CANAL X $\longrightarrow$ Y

$\left(\begin{array}{c}\text{demande de déconnexion}\\\text{en transit}\end{array}\right)$

*FIG.7*

$e_4^3$

$m^5$

$a_4^7$

$m^2$

$a_4^4$

$a_4^2$

$e_4^1$

(pas de message)

$m^4$

$a_4^5$

$m^1$

$a_4^3$

$a_4^6$

$a_4^1$

$e_4^2$

$\left(\begin{array}{c}\text{demande de connexion}\\\text{en transit}\end{array}\right)$

## FIG.8

$S_1$ $S_2$ $S_3$ $S_4$

$e_1^1$ $e_1^2$ $e_2^1$ $e_2^2$ $e_3^1$ $e_3^2$ $e_4^1$ $e_4^2$

t=0

$a_1^2$ $a_2^2$ $a_3^1$ $a_4^2$ $m^2, m^3$

1

$a_2^1$ $a_4^3$ $m^4$

2

3

4

t=5

$e_1^1$ $e_1^2$ $e_2^1$ $e_2^2$ $e_3^1$ $e_3^2$ $e_4^1$ $e_4^2$

## FIG.9

$S_1$ $S_2$ $S_3$ $S_4$

$e_1^1$ $e_1^2$ $e_2^1$ $e_2^2$ $e_3^1$ $e_3^2$ $e_4^1$ $e_4^2$

t=0

$a_1^2$ $\frac{1}{2}a_2^2$ $\frac{1}{2}a_3^1$ $a_4^2$ $m^2,$ $1/2m^3$

1

$\frac{1}{2}a_2^1$ $\frac{1}{2}a_4^3$ $1/2m^4$

2

$\frac{1}{2}a_2^2$ $\frac{1}{2}a_3^1$ $1/2m^3$

3

$\frac{1}{2}a_4^3$ $1/2m^4$

$\frac{1}{2}a_2^1$

4

t=5

$e_1^1$ $e_1^2$ $e_2^1$ $e_2^2$ $e_3^1$ $e_3^2$ $e_4^1$ $e_4^2$

FIG.10

FIG.11